# EUROPEAN PATENT APPLICATION

(11) **EP 1 992 544 A2**
(43) Date of publication of application: **19.11.2008**
(21) Application number: 08009026.9
(22) Date of filing: 15.05.2008
(51) Int. Cl.: B62D 1/187, B62D 1/19

(54) **Steering system**

(30) Priority: 17.05.2007 JP 2007131144
(71) Applicant: NSK Ltd., Tokyo 141-8560 (JP)
(72) Inventor: Yamada, Jun, Maebashi-shi Gumma (JP)
(74) Representative: Grünecker, Kinkeldey, Stockmair & Schwanhäusser Anwaltssozietät

(57) **Abstract**

If a component of a high collision load obliquely upward of the vehicular front at a secondary collision time acts on a steering column 3, the column-side brackets 25a and 25b provided at the vehicular front side portions of the steering columnmove obliquelyupwardof the vehicle front against the fastening force of fastening means 27. However, the uppermost portions of the column-side brackets abut against a stopper 34, which is mounted on the lower face of a flange 26a (or an abutting portion 26a1) of a vehicle body side bracket 26, thereby to absorb a component of a collision load while the stopper being elastically deformed.

## Description

### BACKGROUND OF INVENTION

### Field of the Invention

The present invention relates to a tilt-adjusting type steering system for tilting a steering column.

### Description of the Related Art

In the tilt-adjusting type steering system, a steering column for rotatably supporting a steering shaft is arranged at an upward inclination of a predetermined angle toward the vehicular back, and the steering column is so tilted by operating a tilt mechanism that a steering wheel mounted in the rear end of the steering shaft may be brought into the optimum position according to the driving position of the driver.

The aforementioned tilt mechanism is known, as disclosed in JP-A-2001-171528, for example. The tilt mechanism comprises a column-side bracket fixed on the vehicular rear side of a steering column and having a through hole in vehicular widthwise direction, a vehicle body side bracket so fixed on a vehicle body side member as to clamp the column-side bracket in the vehicular widthwise direction and having tilt slots so provided at a position corresponding to said through hole that the longitudinal axis extends obliquely upward and downward, a tilt bolt inserted into said through hole and said tilt slots, and fastening means caused by turning the tilt bolt to fasten or release the column-side bracket and the vehicle body side bracket.

When a collision load directed forward of a vehicle is inputted at a secondary collision of the vehicle from the driver to a steering wheel, a component of the high collision load acts obliquely upward of the vehicular front upon a steering column arranged at an upward inclination toward the vehicular back. When this collision load component acts, the column-side bracket moves obliquely upward together with the steering column against the fastening force of the fastening means of the tilt mechanism. As a result, the tilt bolt may come into abutment against the circumference of the tilt slots provided in the vehicle body side bracket and the circumference of the through hole of the column-side bracket, thereby to input a high external force.

It is, therefore, conceivable to increase the thicknesses of the vehicle body side bracket and the column-side bracket thereby to enhance the rigidities of the circumferences of the tilt slots and the through hole to abut the tilt bolt. If the strong brackets having the increased thicknesses are manufactured, there arise a problem in the aspect of a manufacturing cost and a problem that the weight is increased to deteriorate a tilting operability.

### SUMMARY OF INVENTION

In one or more embodiments of the invention, a tilt-adjusting type steering system is provided not to be made such that a vehicle body side bracket and a column-side bracket constituting a tilt mechanism are enhanced in rigidity by increasing the thickness, and to be improved in the tilting operability while reducing the manufacturing cost.

According to a first aspect of the invention, a steering system is provided with a steering wheel, a steering shaft to which the steering wheel is attached, a steering column for rotatably supporting the steering shaft, which a tilt mechanism which is tilted freely to the steering column is provided with a column-side bracket fixed on the vehicular rear side of the steering column, which a vehicle body side bracket is provided with a pair of side plates arranged to clamp the column-side bracket in vehicular widthwise direction, and a flange fixed to a vehicle body side member, a through hole provided in the column-side bracket, tilt slots which are provided in the side plates of the vehicle body side bracket at a position corresponding to the through hole and are elongated in vertical direction, a tilt bolt inserted into the through hole and the tilt slots, and an operation lever which fastens the column-side bracket and the vehicle body side bracket and releases the fastened states by operating, the operation lever being attached to the tilt bolt, wherein the steering column and the flange of the vehicle body side bracket come into abutment each other when the steering column moves to an upper end portion of the tilt slots at the time of a secondary collision.

According to a second aspect of the invention, the steering column and the flange of the vehicle body side bracket come into abutment each other before contacts occur between the upper end of the tilt slots and the tilt bolt and between a lower end of the through hole and the tilt bolt at the time of the secondary collision.

According to a third aspect of the invention, the through hole provided in the column-side bracket is a slot extending in column axis direction.

According to a forth aspect of the invention, wherein the flange of the vehicle body side bracket is separably attached from the vehicle body side member.

According to a fifth aspect of the invention, the steering column comprises an outer column and an inner column, the outer column and the inner column are fitted to movable and relative each other in axial direction, and the outer column is formed by die casting.

According to a sixth aspect of the invention, the steering column and the vehicle body side bracket come into abutment each other through a stopper to which an absorption of an impact load elastically deforms.

According to a seventh aspect of the invention, the stopper is made of a synthetic resin which is excellent in fatigue resistance, creep resistance, wear resistance and chemical resistance.

According to an eighth aspect of the invention, the stopper is fixedly attached to the steering column and the stopper comprises a ridge extended in vehicular longitudinal direction on an abutting face thereof, and the flange of the vehicle body side bracket comprises a rectilinear groove extended in vehicular longitudinal direction to fit the stopper.

According to a ninth aspect of the invention, the stopper is fixedly attached to the steering column and comprises the rectilinear groove extended in vehicular longitudinal direction on the abutting face thereof, and the flange of the vehicle body side bracket comprises the ridge extended in vehicular longitudinal direction to fit the stopper.

According to a tenth aspect of the invention, the stopper is fixedly attached to the flange of the vehicle body side bracket and comprises the ridge extended in vehicular longitudinal direction on the abutting face thereof, and the steering column comprises the rectilinear groove extended in vehicular longitudinal direction to fit the stopper.

According to a eleventh aspect of the invention, the stopper is fixedly attached to the flange of the vehicle body side bracket and comprises the rectilinear groove extended in vehicular longitudinal direction on the abutting face thereof, and the steering column comprises the ridge extended in vehicular longitudinal direction to fit the stopper.

According to a twelfth aspect of the invention, the steering shaft comprises an electric power steering apparatus for transmitting a steering aiding force to the steering shaft, and a vehicular front side of the steering column is fixed on a housing of the steering aiding mechanism.

According to the aspects of the invention, one of the column-side bracket and the vehicle body side bracket has the stopper, which comes, when an impact load directly obliquely upward of the vehicular front acts on the steering column at a secondary collision time, into abutment against the other of the column-side bracket and the vehicle body side bracket so that it regulates the movement of the steering column in the obliquely upward direction of the vehicular front thereby to reduce the abutment load at the time when the tilt bolt abuts against the through hole and the tilt slots. Therefore, the column-side bracket and the vehicle body side bracket may be made of members set to an ordinary thickness for cutting the manufacturing cost. Moreover, the thickness of the column-side bracket may be reduced the weight thereby to improve a tilting operability.

The column and the column stopper is set to come into abutment each other before the fastening rod contacts with the upper end of the tilt groove and also a bottom telescopic groove contacts with a bottom fastening rod when the column moves to an upper tilt end by inputting collision load. The column moves to the telescopic direction after the column moves to the upper tilt end. At this time, if the column stopper dose not exist, roughness of the telescopic groove surface at the contact at the bottom effects energy absorption. Further, load of the energy absorption dose not output the designed value by separating a capsule when the energy absorption increases caused by large roughness. Therefore, the roughness dose not effect the energy absorption when the stopper potion is set. Further, the capsule separates properly.

Other aspects and advantages of the invention will be apparent from the following description and the appended claims.

### BRIEF DESCRIPTION OF THE DRAWINGS

Fig. 1 is an entire constitution diagram showing one of embodiment of the invention,
Fig. 2 is a diagram showing an essential portion of the steering system from the side portion,
Fig. 3 is a diagram showing an essential portion of the steering system perspectively,
Fig. 4 is a top plan view of the steering system,
Fig. 5 is a view taken along line A - A of Fig. 2,
Fig. 6 is a perspective view showing a column stopper and an upper bracket of the first embodiment,
Fig. 7 is a perspective view showing the state, in which the column stopper of the first embodiment is mounted in the upper bracket,
Fig. 8 is a view showing the state, in which the column stopper of the first embodiment is mounted in the upper bracket, in the longitudinal direction of the vehicle,
Fig. 9 is a diagram showing the state, in which the column stopper of the first embodiment is mounted in the upper bracket, in the transverse direction of the vehicle,
Fig. 10 is a perspective view showing a column stopper and an upper bracket of the second embodiment, and
Fig. 11 is a view showing a stopper is fixedly attached to a steering column of Fig.5.

### DESCRIPTION OF EXEMPLARY EMBODIMENTS

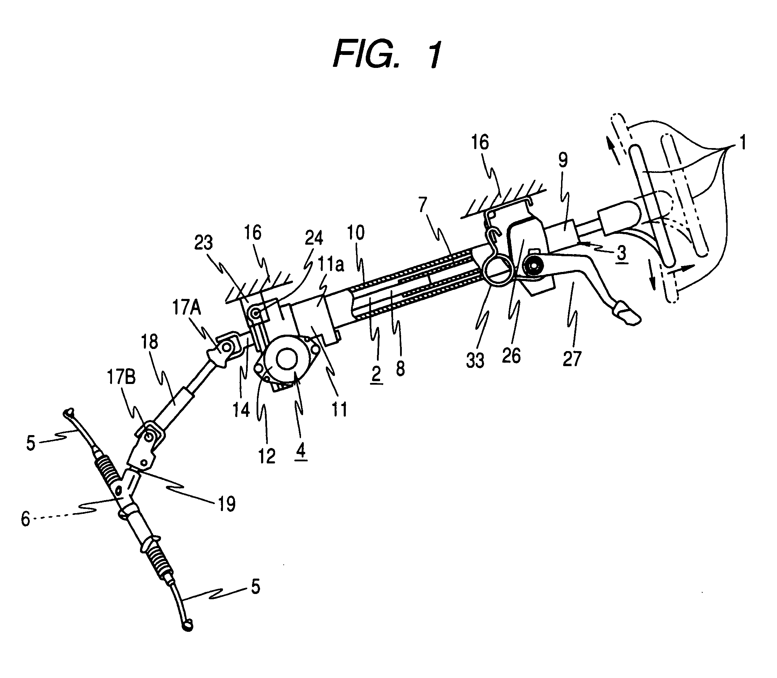

The modes of embodiment of the invention are described in the following with reference to the accompanying drawings from Fig. 1 to Fig. 7.

In Fig. 1 to Fig. 3, numeral 2 designates a steering shaft mounting a steering wheel 1 on the side of a vehicular rear (on the right-hand side in Fig. 1), and this steering shaft 2 is rotatably held in a steering column 3 arranged with an upward inclination toward the back of the vehicle. To the side of the vehicular front side (or the left-hand end in Fig. 1) of the steering shaft 2, there is connected a steering aiding mechanism 4, which is constituted of a worm speed reducer 11 for applying a steering aiding torque to the steering shaft 2, and an electric motor 12 for generating the steering aiding torque in the worm speed reducer 11.

To a output shaft 14 of the worm speed reducer 11 through a universal joint 17A, there is connected an intermediate shaft 18, which is connected through a universal joint 17B to a pinion shaft 19 of a rack-and-pinion type steering gear mechanism 6. The rack shaft (although not shown) of the steering gear mechanism 6 is connected through a tie rod 5 to the not-shown steering wheel.

The steering shaft 2 includes an outer shaft 7 and an inner shaft 8, and the front-end portion of the outer shaft 7 and the rear-end portion of the inner shaft 8 are splined. Here, the aforementioned splined sliding portion may also be coated with a low-friction material.

The cylindrical steering column 3 into which the steering shaft 2 is inserted, constituted by combining an outer column 9 which is die-casting production of aluminum and magnesium or the like and an inner column 10 telescopically and fitted each other so as to adjust a position of the steering wheel in an axial direction.

Moreover, the front-end portion of the inner column 10 is fixed on the rear-end face of a housing 11a of the worm speed reducer 11. The inner shaft 8 is inserted into the housing 11a of the worm speed reducer 11 and connected at a front-end portion of the inner shaft 8 to the output shaft 14 protruding from the front-end face of the housing 11a of the worm speed reducer 11.

On the other hand, the outer column 9 of the steering column 3 is so supported on a vehicle body side member 16 by an upper bracket 26 as may be adjusted in a tilt position and in a telescopic position. The housing 11a of the worm speed reducer 11 in the steering aiding mechanism 4 is supported as to rock vertically on a pivot pin 24 turnably supported in a lower bracket 23 mounted on the vehicle body side member 16.

The steering gear mechanism 6 is constituted, although not shown, into the rack-and-pinion type, in which a pinion connected to the pinion shaft 19 and the a rack shaft having a rack for meshing with that pinion are arranged in a gear housing, so that the rotational motions transmitted to the pinion shaft 19 are converted into rectilinear motions by the rack shaft.

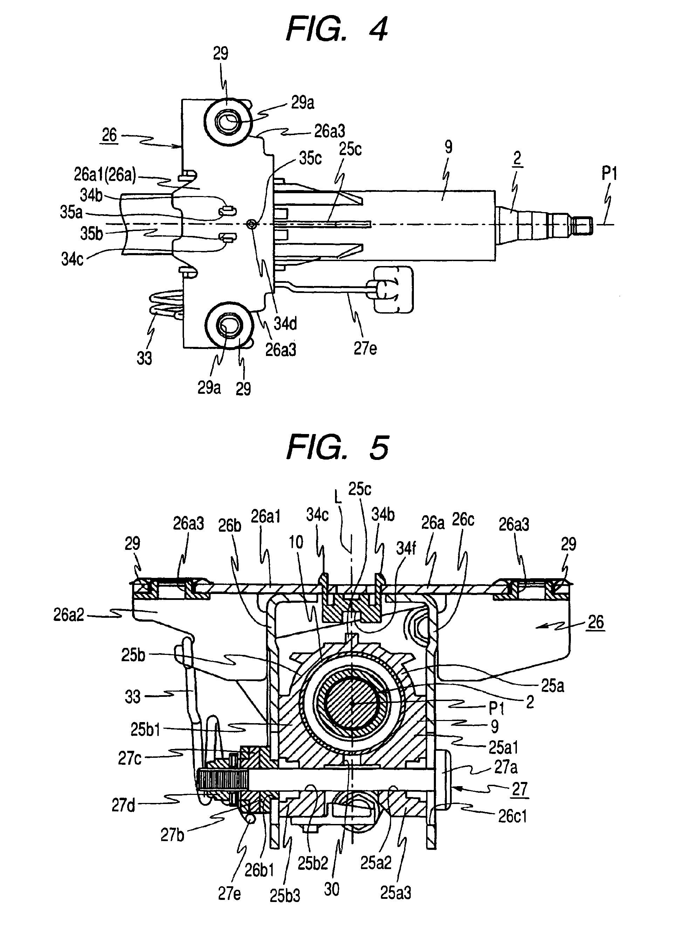

On the vehicular front side of the outer column 9, as shown in Fig. 5, there are integrally provided a pair of clamp portions 25a and 25b, which are so spaced in the vehicular widthwise direction as to hold the outer circumference of the inner column 10. These clamp portions 25a and 25b are clamped in the vehicular widthwise direction by the upper bracket 26 which is fixed on the vehicle body side member 16. Moreover, the upper bracket 26 has a clamp device 27 for clamping the inner column 10 so that the clamp portions 25a and 25b may be elastically deformed in direction to come closer to each other but not to move relative to each other in the direction of a column axis P1.

The paired clamp portions 25a and 25b are members symmetric to a vertical plane L extending through the column axis P1, and comprises a pair of enveloping portions 25a1 and 25b1 having arcuate inner circumferences for enveloping the outer circumference of the inner column 10, and a pair of clamping force applying portions 25a3 and 25b3 having telescopic slots 25a2 and 25b2 provided continuously from the lower portions of those enveloping portions 25a1 and 25b1 for fitting a later-described fastening rod 27a loosely.

The telescopic slots 25a2 and 25b2 are provided to extend through the clamping force applying portions 25a3 and 25b3 in the vehicular widthwise direction and to have their longer axes extending in the direction of the column axis P1. Moreover, the paired clamping force applying portions 25a3 and 25b3 are made separate from each other by forming a clamp portion slit 30 along the vertical plane L.

Here, at the boundary position of the highest positions of the paired clamp portions 25a and 25b, there is provided a ridge 25c which is so provided along the direction of the column axis P1 as to engage with the later-described column stopper 34 mounted on the upper bracket 26.

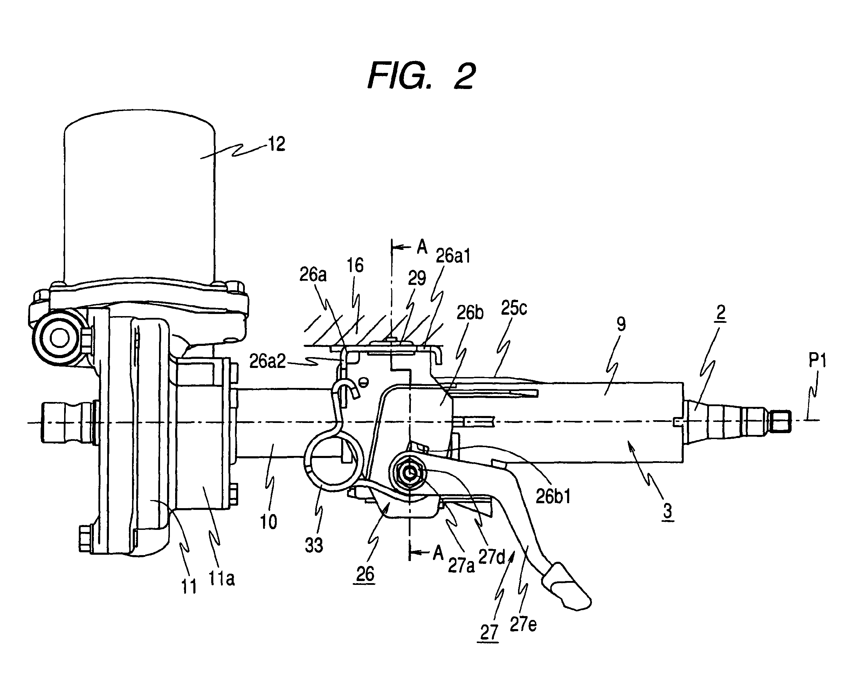

The upper bracket 26 is equipped, as shown in Fig. 2 to Fig. 6, with a flange 26a fixed on the vehicle body side member 16 and arranged between the body member and the column, and a pair of side plates 26b and 26c fixed on that flange 26a and spaced and arranged in parallel in the vehicular widthwise direction while extending downward. In the paired side plates 26b and 26c, there are provided tilting slots 26b1 and 26cl, which have their longer axes extending in the vertical direction.

The flange 26a is constituted of an abutting portion 26a1 for abutting against the vehicle body side member 16, and a droopy Portion 26a2 folded on the vehicular front side of that abutting portion 26a1 and extending downward. In a slit 26a3 provided in the vehicular rear portion of the abutting portion 26a1 and opened to the vehicular rear side, there is fitted a releasing capsule 29, which has a bolt through hole 29a provided therein. Moreover, a fixing bolt inserted from below the releasing capsule 29 into the bolt through hole 29a is fastened, although not shown, into the vehicle body side member 16 thereby to mount the abutting portion 26al of the flange 26a on the vehicle body side member 16. Moreover, the enveloping portions 25a1 and 25b1 of the paired clamp portions 25a and 25b abut, at their outer circumferences, against the inner sides of the side plates 26b and 26c.

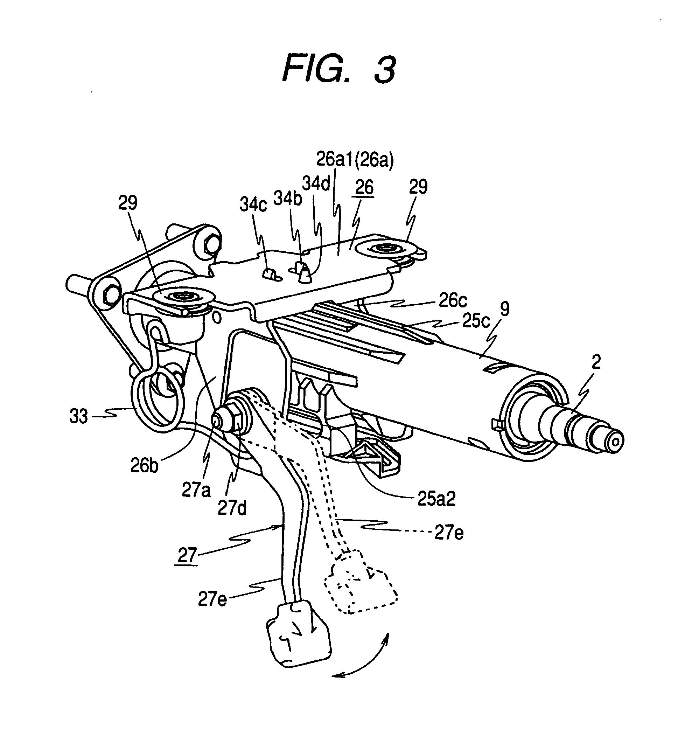

As shown in Fig. 3 and Fig. 5, the clamp device 27 has: a fastening rod 27a inserted into the tilting slots 26b1 and 26c1 of the paired side plates 26b and 26c and the telescopic slots 25a2 and 25b2 of the paired clamp portions 25a and 25b;
a stationary cam 27b having a protrusion engaging with a tilt groove, a movable cam 27c and an adjusting nut 27d, which is fitted from the screw side (i.e., on the left-hand side of Fig. 5) of the fastening rod 27a; and
an operation lever 27e fixed on the movable cam 27c. The movable cam 27c and the stationary cam 27b, which are integrally operated by the operation lever 27e, constitute a cam lock mechanism.

Between the droopy Portion 26a2 of the upper bracket 26 and the screw side of the fastening rod 27a, moreover, there are connected the two ends of a coiled tilt spring 33, which applies a pushing spring force to the outer column 9 through the fastening rod 27a and the paired clamp portions 25a and 25b.

### (First Embodiment)

In Fig. 5, the column stopper 34 is mounted on close to the uppermost portions of the paired clamp portions 25a and 25b provided on the vehicular front side of the outer column 9 on the lower face of the flange 26a (or the abutting portion 26a1) of the upper bracket 26.

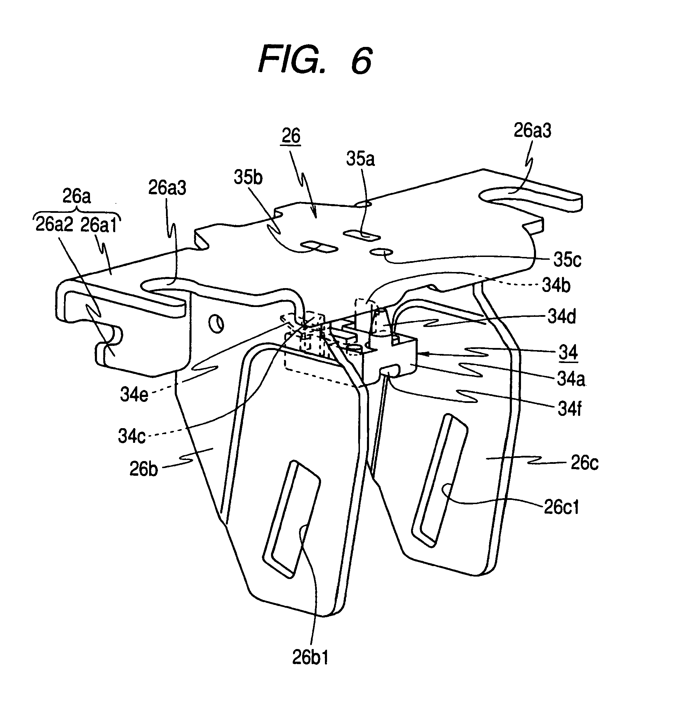

The abutting portion 26a1 of the upper bracket 26 has a plurality of holes for positioning and removably fixing the column stopper 34. In Fig. 4 and Fig. 6, there are provided first and second engagement holes 35a and 35b, which are spaced in the vehicular widthwise direction and extend through the abutting portion 26a1, and a third engagement hole 35c, which is positioned at the vehicular rear position with respect to those engagement holes 35a and 35b and which extends through the abutting portion 26a1.

Moreover, the column stopper 34 is made of an elastically deformable synthetic resin excellent in fatigue resistance, creep resistance, wearing characteristics and chemical resistance, such as polyacetal resin (POM).

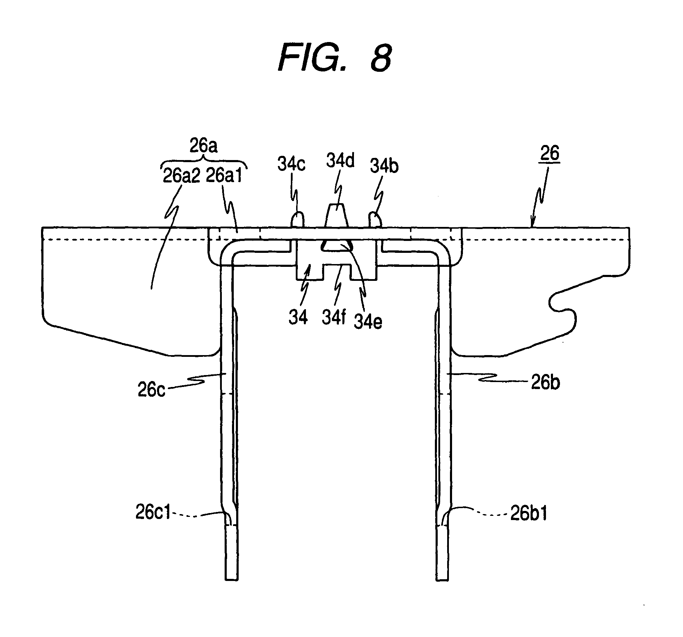

In Fig. 6, Fig. 8 and Fig. 9, the column stopper 34 is a member including a stopper body 34a of a rectangular parallelepiped shape, a pair of pawl portions 34b and 34c provided to protrude from the face of the stopper body 34a for abutting against the abutting portion 26a1, a fitting portion 34d of a truncated shape, an elastic holding portion 34e of a plate shape, a rectilinear groove 34f provided in the back face of the stopper body 34a for unabutting against the abutting portion 26a1.

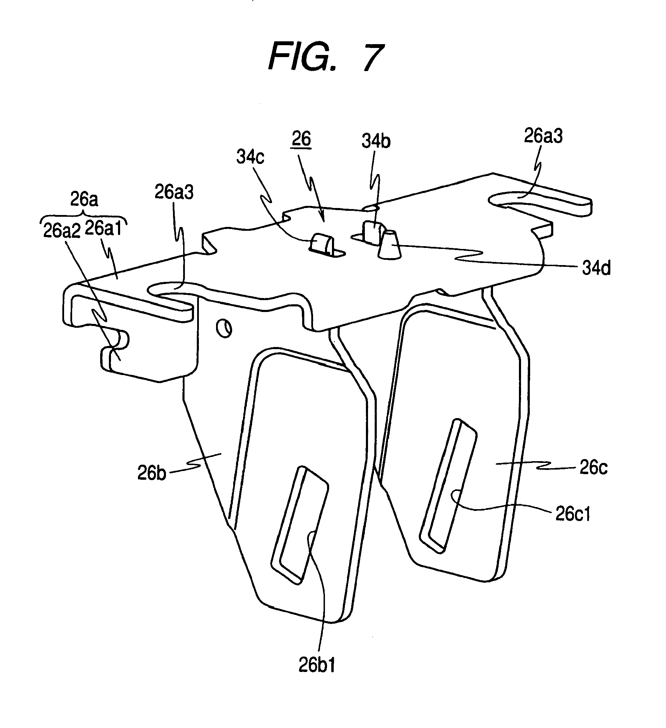

In Fig. 7, the column stopper 34 inserts its paired pawl portions 34b and 34c, while elastically deforming them, from the lower-side openings of the first and second engagement holes 35a and 35b. The pawl portions 34b and 34c are elastically returned when they protrude from the upper openings of the first and second engagement holes 35a and 35b. The pawl portions 34b and 34c engage with the peripheral edges of the upper openings. The fitting portion 34d fits in the third engagement hole 35c. Here, the elastic holding portion 34e is caused, by the elastic restoring force generated when it abuts against the lower face of the abutting portion 26a1, to generate such a force to push the stopper body 34a downward, that the paired pawl portions 34b and 34c may engage with the peripheral edges of the upper openings of the first and second engagement holes 35a and 35b.

As a result, in Fig. 5, the column stopper 34 is mounted, while the stopper body 34a being positioned, on the lower face of the abutting portion 26a1, and the groove 34f provided in the back-side face of the stopper body 34a extends in the direction of the column axis P1 while facing the ridge 25c provided in the boundary position of the uppermost portions of the paired clamp portions 25a and 25b.

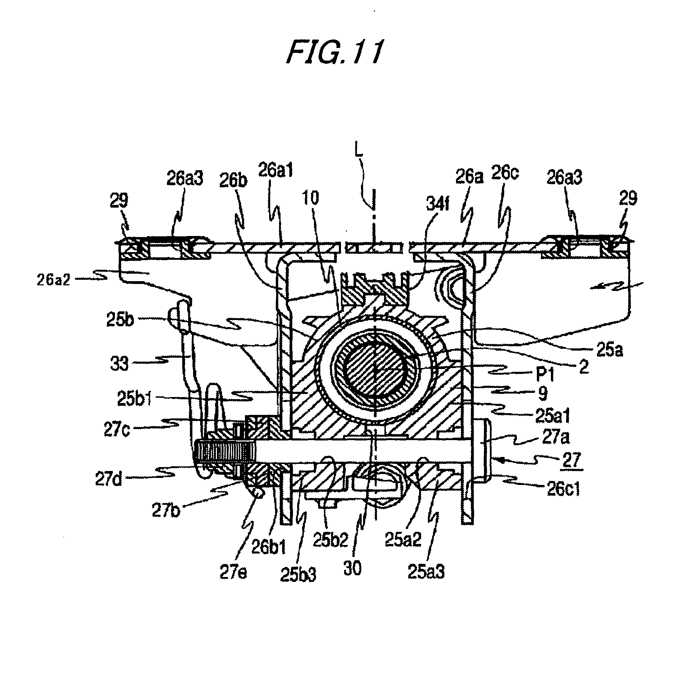

The column stopper 34 and the flange 26a come into abutment each other to fix a resin column stopper on the upper column stopper. In Fig.11, the relations of the ridge 25c and the groove 34f may be switched. That is, the protrusion can be formed on the column stopper 34 or the flange 26a. The ridge 34 and the groove 34f may be removed from the both side of surface and the both surfaces may come into abutment each other flat face to flat face.

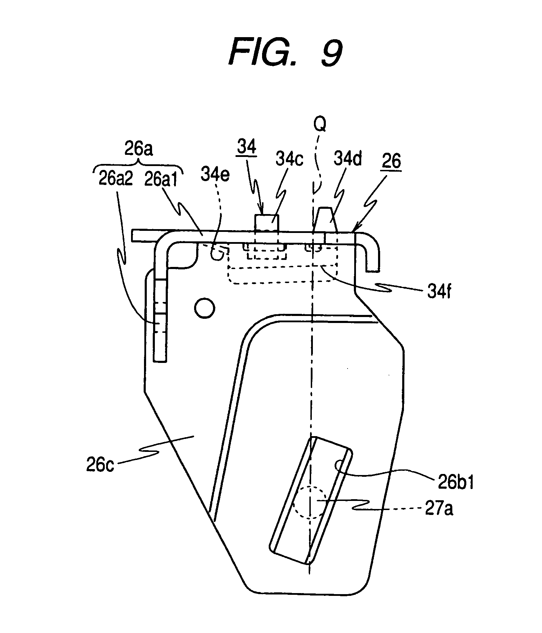

In Fig. 9, moreover, the column stopper 34 is so mounted on the lower face of the abutting portion 26a1 that it is positioned closer to the side of the steering wheel 1 (namely, that it is positioned on the right-hand side with respect to a vertical line Q passing through the axis of the fastening rod 27a of Fig. 9) than the fastening rod 27a of the clamp device 27, which holds the inclination angle of the steering column 3 (or the outer column 9) arranged at an upward inclination backward of the vehicle.

The column-side bracket of the embodiment corresponds to the paired clamp portions 25a and 25b. the vehicle body side bracket of the embodiment corresponds to the upper bracket. The through hole of the embodiment corresponds to the telescopic slots 25a2 and 25b2. The tilt bolt of the embodiment corresponds to the fastening rod 27a; the fastening means of the embodiment corresponds to the clamp device 27. The stopper of the embodiment corresponds to the column stopper 34.

The actions and advantages of the steering system of this embodiment are described in the following.

Fortilting-telescopingadjustments, the operation lever 27e of the clamp device 27 is turned at first in such a direction that the paired clamping force applying portions 25a3 and 25b3 may leave each other in the vehicular widthwise direction. As a result, the inner column 10 is released from its clamped state by the paired enveloping portions 25a1 and 25b1 through the side plates 26b and 26c of the upper bracket 26.

For adjusting the tilt position, the fastening rod 27a is slid in the longitudinal direction of the tilting slots 26b1 and 26c1 of the upper bracket 26 thereby to tilt the steering wheel 13. At this time, the tilting action of the steering wheel 1 may be easily tilted, because the tilt spring 33 for acting a raising force on the outer column 9 is arranged between the upper bracket 26 and the fastening rod 27a of the clamp device 27.

For adjusting the telescopic position, on the other hand, the outer column 9 is moved in the direction of the column axis P1 while the fastening rod 27a being slid in the longitudinal direction of the telescopic slots 25a2 and 25b2 of the paired clamp portions 25a and 25b.

When the operation lever 27e of the clamp device 27 is so turned that the paired clamping force adding portions 25a3 and 25b3 may approach each other, the fastening actions of the inner column 10 by the paired enveloping portions 25a1 and 25b1 are performed. As a result, the movements of the steering column 3 in the direction of the column axis P1 and in the vertical direction are constricted so that the adjustments of the tilt positions or the telescopic positions are completed.

When an impact directed forward of the vehicle is inputted at a secondary collision of the vehicle by the driver to the steering wheel 1, on the other hand, the outer column 9 moves to the front side of the vehicle against the clamping force of the clamp device 27. Then, a sliding frictional force is generated between the outer circumferences of the enveloping portions 25al and 25bl of the paired clamp portions 25a and 25b and the inner faces of the paired side plates 26b and 26c of the upper bracket 26, so that a portion of the impact force is absorbed. At the instant when the fastening rod 27a moves relatively in the direction of the longitudinal axis in the telescopic slots 25a2 and 25b2 so that it abuts against the vehicular rear portion portions of the telescopic slots 25a2 and 25b2, the impact force to the vehicular front side is inputted to the upper bracket 26. At this time, the vehicular rear side of the flange 26a of the upper bracket 26 is fixed on the vehicle body side member 16 through the releasing capsule 29. When the impact force to the vehicular front side is inputted to the flange 26a, therefore, the impact force at the secondary collision time is absorbed while the flange 26a coming out of the releasing capsule 29.

The column and the column stopper is set to come into abutment each other before the fastening rod contacts with the upper end of the tilt groove and also a bottom telescopic groove contacts with a bottom fastening rod when the column moves to an upper tilt end by inputting collision load. The column moves to the telescopic direction after the column moves to the upper tilt end.

Here, the steering column 3 is arranged at an upward inclination backward of the vehicle. If an impact force forward of the vehicle is inputted at the secondary collision time of the vehicle from the driver to the steering wheel 1, a high component of the collision load acts obliquely upward of the vehicular front upon the outer column 9.

When this component of the collision load acts on the outer column 9, the paired clamp portions 25a and 25b provided at the vehicular front side portion of the outer column 9 are to move obliquely upward of the vehicular front against the fastening force of the clamp device 27. However, the uppermost portions of the paired clamp portions 25a and 25b abut against the column stopper 34 mounted on the lower face of the flange 26a (or the abutting portion 26a1) of the upper bracket 26, so that the column stopper 34 then absorbs, while being elastically deformed, to absorb the component of the collision load.

Thus, the component of the collision load is absorbed by the column stopper 34 so that the paired clamp portions 25a and 25b are regulated against the movements obliquely upward of the vehicular front, thereby to reduce the abutting load at the time when the fastening rod 27a of the clamp device 27 abuts against the telescopic slots 25a2 and 25b2 of the paired clamp portions 25a and 25b and the tiling slots 26bl and 26cl of the upper bracket 26.

When the uppermost portions of the paired clamp portions 25a and 25b abut against the column stopper 34, on the other hand, the ridge 25c provided on the uppermost portion of the paired claim portions 25a and 25b is fitted in the rectilinear groove 34f of the column stopper 34. At this time, even if the impact force in the direction eccentric in the vehicular widthwise direction with respect to the column axis P1 extending in the vehicular longitudinal direction from the steering wheel 1 is inputted to the outer column 9, the outer column 9 does not move in the eccentric direction, because the ridge 25c of the paired clamp portions 25a and 25b is fitted in the groove 34f of the column stopper 34.

Therefore, this embodiment is made different from the steering system of the prior art, in which the thicknesses of the paired clamp portions 25a and 25b and the upper bracket 26 are increased to form the telescopic slots 25a2 and 25b2 and the tilting slots 26b1 and 26c1 made highly rigid even if an excessive impact load acts at the secondary collision time. In the embodiment, on the contrary, the paired clamp portions 25a and 25b and the upper bracket 26 are given ordinary thicknesses, and the component of the impact load at the secondary collision time is absorbed by the column stopper 34 thereby to reduce the load applied to the telescopic slots 25a2 and 25b2 and the tilting slots 26b1 and 26c1. Thus, it is possible to lower the manufacturing cost.

Moreover, the paired clamp portions 25a and 25b (or the outer column 9) may be thinned to reduce the weights so that the tilting operability may be made satisfactory.

Even if an impact force in the direction eccentric in the vehicular widthwise direction with respect to the column axis P1 extending in the vehicular longitudinal direction is inputted from the steering wheel 1 to the outer column 9, the ridge 25c of the paired clamp portions 25a and 25b is fitted in the groove 34f of the column stopper 34, when the uppermost portions of the paired clamp portions 25a and 25b come into abutment each other against the column stopper 34, so that the outer column 9 does not move in the direction eccentric in the vehicular widthwise direction. As a result, a prying force to bend the paired side plates 26b and 26c of the upper bracket 26 does not act through the clamp device 27, so that the durability of the upper bracket 26 may be improved.

Moreover, the column stopper 34 of this embodiment inserts its paired pawl portions 34b and 34c, while elastically deforming them, from the lower-side openings of the first and second engagement holes 35a and 35b of the abutting portion 26a1 of the upper bracket 26, and the pawl portions 34b and 34c are elastically returned when they protrude from the upper openings of the first and second engagement holes 35a and 35b, so that they engage with the peripheral edges of the upper openings. As a result, the column stopper 34 may be simply mounted on the abutting portion 26al of the upper bracket 26 so that its assemblymaybe improved to make the manufacturing cost lower.

Moreover, the column stopper 34 has the elastic holding portion 34e, which is caused, by the elastic restoring force generated when it abuts against the lower face of the abutting portion 26a1, to generate such a force to push the stopper body 34a downward, that the paired pawl portions 34b and 34c may engage with the peripheral edges of the upper openings of the first and second engagement holes 35a and 35b. As a result, the column stopper 34 may be reliably mounted on the abutting portion 26al of the upper bracket 26.

As shown in Fig. 9, moreover, the column stopper 34 mounted on the lower face of the abutting portion 26al is positioned on the side of the steering wheel 1 with respect to the fastening rod 27a of the clamp device 27, and the steering column 3 (or the outer column 9) is regulated against the movement by the column stopper 34 as soon as it moves obliquely upward of the vehicular front at the secondary collision time. This regulation makes it possible to reduce the bending stress which is inputted to the front side portion of the steering column (or the inner column 10) which is fixed on the rear-end face of the housing 11a of the worm speed reducer 11.

### (Second Embodiment)

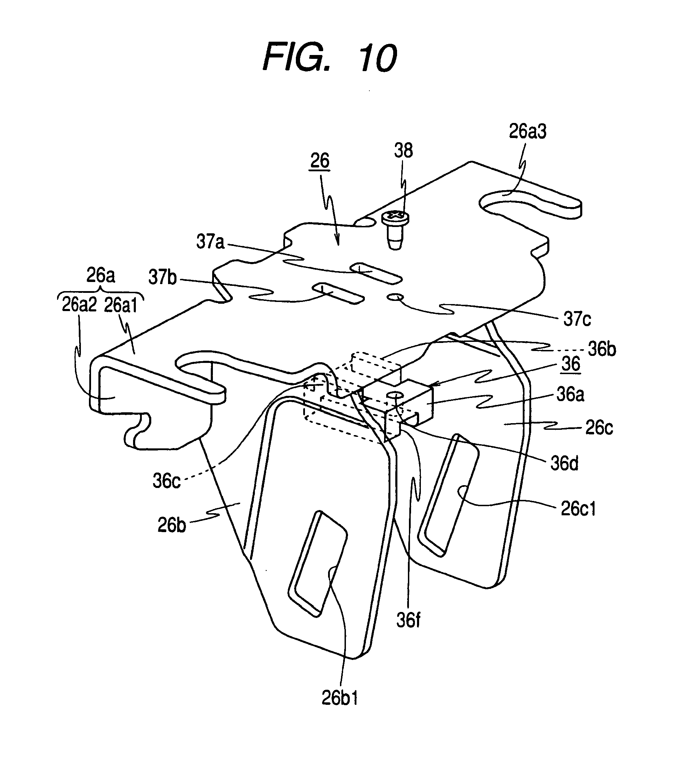

Next, Fig. 10 shows a column stopper 36 of second embodiment, which is mounted on the lower face of the flange 26a (or the abutting portion 26al) of the upper bracket 26. Here, the same portions as those of the constitutions shown in Fig. 1 to Fig. 9 are omitted on their descriptions by designating them by the common reference numerals.

In the abutting portion 26a1 of the upper bracket 26, there are provided first and second engagement holes 37a and 37b which are spaced in the vehicular widthwise direction and extend through the abutting portion 26a1, and a threaded through hole 37c which extends through the abutting portion 26al at the vehicular rear position with respect to those engagement holes 37a and 37b.

The column stopper 36 of this embodiment is also made of a member of an elastically deformable synthetic resin, and is constituted of a stopper body 36a of a substantially rectangular parallelepiped shape, a pair of ridges 36b and 36c protruding to the face of the stopper body 36a for abutting against the abutting portion 26a1, a threaded hole 36d, and a rectilinear groove 36f provided in the back-side face of the stopper body 36a, which does not abut against the abutting portion 26a1.

The column stopper 34 is mounted on the lower face of the abutting portion 26a1, while the stopper body 34a being positioned, by fitting the paired ridges 36b and 36c in the first and second engagement holes 37a and 37b and by screwing a fixing screw 38 having passed the threaded through hole 37c from above the abutting portion 26a1, into the threaded hole 36d. Moreover, the groove 36f provided in the back-side face of the stopper body 36a extends in the direction of the column axis P1 while facing downward the ridge 25c provided at the boundary position of the uppermost portions of the paired clamp portions 25a and 25b.

Here, the stopper of the embodiment corresponds to the column stopper 36.

The actions and advantages of this embodiment are described in the following.

The steering column 3 is arranged at an upward inclination backward of the vehicle. If an impact force forward of the vehicle is inputted at the secondary collision time of the vehicle from the driver to the steering wheel 1, a high component of the collision load acts obliquely upward of the vehicular front upon the outer column 9.

When this component of the collision load acts on the outer column 9, the paired clamp portions 25a and 25b provided at the vehicular front side portion of the outer column 9 are to move obliquely upward of the vehicular front against the fastening force of the clamp device 27. However, the uppermost portions of the paired clamp portions 25a and 25b abut against the column stopper 36 mounted on the lower face of the flange 26a (or the abutting portion 26a1) of the upper bracket 26, so that the column stopper 36 then absorbs, while being elastically deformed, to absorb the component of the collision load.

Thus, the component of the collision load is absorbed by the column stopper 36 so that the paired clamp portions 25a and 25b are regulated against the movements obliquely upward of the vehicular front, thereby to reduce the abutting load at the time when the fastening rod 27a of the clamp device 27 abuts against the telescopic slots 25a2 and 25b2 of the paired clamp portions 25a and 25b and the tiling slots 26b1 and 26c1 of the upper bracket 26.

When the uppermost portions of the paired clamp portions 25a and 25b abut against the column stopper 36, on the other hand, the ridge 25c provided on the uppermost portion of the paired claim portions 25a and 25b is fitted in the rectilinear groove 36f of the column stopper 36. At this time, even if the impact force in the direction eccentric in the vehicular widthwise direction with respect to the column axis P1 extending in the vehicular longitudinal direction from the steering wheel 1 is inputted to the outer column 9, the outer column 9 does not move in the eccentric direction, because the ridge 25c of the paired clamp portions 25a and 25b is fitted in the groove 36f of the column stopper 36.

Thus in this embodiment, too, the paired clamp portions 25a and 25b and the upper bracket 26 are given ordinary thicknesses, and the component of the impact load at the secondary collision time is absorbed by the column stopper 36 thereby to reduce the load applied to the telescopic slots 25a2 and 25b2 and the tilting slots 26b1 and 26c1. Thus, it is possible to lower the manufacturing cost. Moreover, the paired clamp portions 25a and 25b (or the outer column 9) may be thinned to reduce the weights so that the tilting operability may be made satisfactory.

Even if an impact force in the direction eccentric in the vehicular widthwise direction with respect to the column axis P1 extending in the vehicular longitudinal direction is inputted from the steering wheel 1 to the outer column 9, the ridge 25c of the paired clamp portions 25a and 25b is fitted in the groove 36f of the column stopper 36, when the uppermost portions of the paired clamp portions 25a and 25b come into abutment each other against the column stopper 36, so that the outer column 9 does not move in the direction eccentric in the vehicular widthwise direction. As a result, a prying force to bend the paired side plates 26b and 26c of the upper bracket 26 does not act through the clamp device 27, so that the durability of the upper bracket 26 may be improved.

In the aforementioned embodiment, the steering column 3 is constituted such that the outer column 9 arranged in the back of the vehicle fits slidably the inner column 10 arranged in the front of the vehicle. By arranging the outer column in the front of the vehicle and the inner column in the back of the vehicle, however, the outer column may be so supported in the vehicle body side member 16 by the column bracket that the tilt position and the telescopic position may be adjusted.

In the aforementioned embodiment, moreover, the column stoppers 34 and 36 are mounted on the upper bracket 26. On the outer circumference of the outer column 9, however, there may be mounted a stopper, which is elastically deformed to absorb the impact force so that a portion of the upper bracket 26 may abut against the stopper.

Moreover, a ridge may be provided on the later-described column stoppers 34 and 36 mounted on the upper bracket 26, and a rectilinear groove to be fitted on the aforementioned ridge may be provided at the uppermost portions of the paired clamp portions 25a and 25b.

Moreover, the lengths of the tilting slots 26b1 and 26c1 of the upper bracket 26 may be set so large that the fastening rod 27a of the clamp device 27 may not contact the hole circumference before the paired clamp portions 25a and 25b are moved obliquely upward of the vehicular front by the input of the component of the collision load so that the uppermost portions of the paired clamp portions 25a and 25b abut against the column stoppers 34 and 36.

In the embodiments, moreover, the steering aiding mechanism 4 is connected to the vehicular front side of the steering shaft 2, but the steering system may not be equipped with the steering aiding mechanism 4.
the stopper 34 maybe fixedly attached to the steering column 3 and the stopper 34 comprises the ridge or the rectilinear groove extended in vehicular longitudinal direction on the abutting face thereof, and the flange 26a of the vehicle body side bracket comprises the ridge or the rectilinear groove extended in vehicular longitudinal direction to fit the stopper 34.

## Claims

1. A steering system comprising:
a steering wheel;
a steering shaft to which the steering wheel is attached;
a steering column for rotatably supporting the steering shaft;
a tilt mechanism which is tilted freely to the steering column comprising:
a column-side bracket fixed on the vehicular rear side of the steering column;
a vehicle body side bracket comprising:
a pair of side plates arranged to clamp the column-side bracket in vehicular widthwise direction; and
a flange fixed to a vehicle body side member;
a through hole provided in the column-side bracket;
tilt slots which are provided in the side plates of the vehicle body side bracket at a position corresponding to the through hole and are elongated in vertical direction;
a tilt bolt inserted into the through hole and the tilt slots; and
an operation lever which fastens the column-side bracket and the vehicle body side bracket and releases the fastened states by operating, the operation lever being attached to the tilt bolt,
wherein the steering column and the flange of the vehicle body side bracket come into abutment each other when the steering column moves to an upper end portion of the tilt slots at a time of a secondary collision.

2. The steering system according to claim 1,
wherein the steering column and the flange of the vehicle body side bracket come into abutment each other before contacts occur between the upper end of the tilt slots and the tilt bolt and between a lower end of the through hole and the tilt bolt at the time of the secondary collision.

3. The steering system according to claim 1,
wherein the through hole provided in the column-side bracket is a slot extending in column axis direction.

4. The steering system according to claim 1,
wherein the flange of the vehicle body side bracket is separably attached from the vehicle body side member.

5. The steering system according to claim 1,
wherein the steering column comprises an outer column and an inner column,
the outer column and the inner column are fitted to movable and relative each other in axial direction, and
the outer column is formed by die casting.

6. The steering system according to claim 1,
wherein the steering column and the vehicle body side bracket come into abutment each other through a stopper to which an absorption of an impact load elastically deforms.

7. The steering system according to claim 6;
wherein the stopper is made of a synthetic resin which is excellent in fatigue resistance, creep resistance, wear resistance and chemical resistance.

8. The steering system according to claim 6,
wherein the stopper is fixedly attached to the steering column and the stopper comprises a ridge extended in vehicular longitudinal direction on an abutting face thereof, and
the flange of the vehicle body side bracket comprises a rectilinear groove extended in vehicular longitudinal direction to fit the stopper.

9. The steering system according to claim 6,
wherein the stopper is fixedly attached to the steering column and comprises the rectilinear groove extended in vehicular longitudinal direction on the abutting face thereof, and
the flange of the vehicle body side bracket comprises the ridge extended in vehicular longitudinal direction to fit the stopper.

10. The steering system according to claim 6,
wherein the stopper is fixedly attached to the flange of the vehicle body side bracket and comprises the ridge extended in vehicular longitudinal direction on the abutting face thereof, and
the steering column comprises the rectilinear groove extended in vehicular longitudinal direction to fit the stopper.

11. The steering system according to claim 6,
wherein the stopper is fixedly attached to the flange of the vehicle body side bracket and comprises the rectilinear groove extended in vehicular longitudinal direction on the abutting face thereof, and
the steering column comprises the ridge extended in vehicular longitudinal direction to fit the stopper.

12. The steering system according to claim 1,
wherein the steering shaft comprises an electric power steering apparatus for transmitting a steering aiding force to the steering shaft, and
a vehicular front side of the steering column is fixed on a housing of the steering aiding mechanism.
